(19) Europäisches Patentamt
European Patent Office
Office européen des brevets

(11) **EP 1 986 314 B1**

(12) **FASCICULE DE BREVET EUROPEEN**

(45) Date de publication et mention de la délivrance du brevet:
**15.03.2017 Bulletin 2017/11**

(51) Int Cl.:
**H04B 1/16** (2006.01)   **H04B 1/16** (2006.01)

(51) Int Cl.:
**H02M 3/158** (2006.01)   **H04B 1/16** (2006.01)

(21) Numéro de dépôt: **08103297.1**

(22) Date de dépôt: **01.04.2008**

(54) **Procédé de commande d'une alimentation à découpage à un seul élément inductif et plusieurs sorties, et alimentation correspondante, en particulier pour un téléphone mobile cellulaire**

Steuerverfahren eines Schaltnetzteils mit einem einzigen induktiven Element und mehreren Ausgängen, sowie entsprechende Schaltnetzteilvorrichtung, insbesondere für ein Mobiltelefon

Method of controlling a switching power supply with a single inductive element and several outputs, and corresponding power supply, in particular for a cellular mobile phone

(84) Etats contractants désignés:
**DE FR GB IT**

(30) Priorité: **24.04.2007 FR 0754668**

(43) Date de publication de la demande:
**29.10.2008 Bulletin 2008/44**

(73) Titulaire: **STMicroelectronics SA**
**92120 Montrouge (FR)**

(72) Inventeurs:
- **Premont, Christophe**
  **38360 Sassenage (FR)**
- **Chesneau, David**
  **38500 La Buisse (FR)**
- **Bernard, Christophe**
  **38640 Claix (FR)**

(74) Mandataire: **Grünecker Patent- und**
**Rechtsanwälte**
**PartG mbB**
**Leopoldstraße 4**
**80802 München (DE)**

(56) Documents cités:
**EP-A- 1 427 092   US-A1- 2008 231 115**

- **DONGSHENG MA ET AL: "Single-inductor multiple-output switching converters with bipolar outputs" ISCAS 2001. PROCEEDINGS OF THE 2001 IEEE INTERNATIONAL SYMPOSIUM ON CIRCUITS AND SYSTEMS. SYDNEY, AUSTRALIA, MAY 6 - 9, 2001, IEEE INTERNATIONAL SYMPOSIUM ON CIRCUITS AND SYSTEMS, NEW YORK, NY : IEEE, US, vol. VOL. 1 OF 5, 6 mai 2001 (2001-05-06), pages 301-304, XP010541136 ISBN: 0-7803-6685-9**
- **BAYER E ET AL: "A Single-Inductor Multiple-Output Converter with Peak Current State-Machine Control" APPLIED POWER ELECTRONICS CONFERENCE AND EXPOSITION, 2006. APEC '06. TWENTY-FIRST ANNUAL IEEE MARCH 19, 2006, PISCATAWAY, NJ, USA,IEEE, 19 mars 2006 (2006-03-19), pages 153-159, XP010909937 ISBN: 0-7803-9547-6**
- **WING-HUNG KI ET AL: "Single-inductor multiple-output switching converters" 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001, ANNUAL POWER ELECTRONICS SPECIALISTS CONFERENCE, NEW YORK, NY : IEEE, US, vol. VOL. 1 OF 4. CONF. 32, 17 juin 2001 (2001-06-17), pages 226-231, XP010559152 ISBN: 0-7803-7067-8**

## Description

L'invention concerne les alimentations à découpage et plus particulièrement celles comportant un seul élément inductif et plusieurs sorties régulées.

L'invention s'applique avantageusement, mais non limitativement, aux systèmes portatifs alimentés par batterie, notamment mais non exclusivement les terminaux distants de système de communication sans fil, par exemple les téléphones mobiles cellulaires.

Les systèmes intégrés pour la gestion de l'énergie des applications portables (fonctionnement sur batterie) requièrent de plus en plus de tensions de sortie différentes à réguler, à partir d'une tension de batterie de plus en plus faible.

Une solution traditionnelle consiste à créer une tension régulée à partir de la tension d'alimentation avec un régulateur linéaire. Ce régulateur utilise un condensateur externe pour assurer sa fonction. Et on utilise autant de régulateurs linéaires que de sorties à réguler. Un inconvénient de ce type de régulateur est son faible rendement.

Pour pallier à ce problème de faible rendement, on utilise des alimentations à découpage, également appelées « convertisseurs DC-DC ». Les rendements sont alors proches de 85 à 90%, alors que dans les mêmes conditions, un régulateur linéaire aurait un rendement de seulement 50%.

Cependant, une alimentation à découpage utilise outre un condensateur, un élément inductif.

Pour réguler plusieurs sorties, il est envisageable d'utiliser plusieurs alimentations à découpage. Mais, ceci suppose alors de mettre en oeuvre autant d'éléments inductifs, ce qui augmente le coût et la surface du circuit intégré.

Aussi, a-t-il été envisagé d'utiliser des alimentations à découpage capables de réguler plusieurs sorties distinctes avec un seul élément inductif.

Cependant, il n'est pas toujours possible de garder une dynamique suffisante entre les différentes tensions de sortie.

Par ailleurs, les systèmes d'alimentation à découpage actuels ne permettent pas de créer, en sortie, des tensions régulées avec des signes différents.

Une solution pour obtenir une tension positive et une tension négative consiste à utiliser au moins deux régulateurs linéaires, avec leurs inconvénients précités, et un nombre important de composants externes.

Selon un mode de mise en oeuvre, il est proposé de réguler différentes sorties indépendantes en termes de niveaux d'énergie, en utilisant un seul élément inductif et en présentant une dynamique, ou différence de tensions entre deux sorties régulées, plus importante.

Selon un mode de mise en oeuvre, il est possible de générer une tension négative sans faire appel à des technologies permettant de gérer des fortes tensions.

Selon l'invention, il est proposé une alimentation à découpage, comme décrit dans la revendication 1.

Il est ainsi possible de générer et réguler au moins deux tensions différentes, une positive et une négative. Cela permet de retrouver d'une part une dynamique correcte à partir d'une faible tension de batterie. D'autre part, pour certaines applications telles que les amplificateurs audio, cela permet également d'obtenir des tensions d'alimentation symétriques permettant de réduire le filtrage et les problèmes de conception lié à un mode commun non nul. Enfin, une telle alimentation peut être réalisée sur silicium et peut générer une tension négative sans faire appel à des technologies permettant de gérer des fortes tensions.

Par ailleurs, les moyens de commandes sont aptes à sélectionner simultanément lesdites au moins deux des sorties individuellement sélectionnables.

Selon un mode de réalisation, la cellule de commutation comprend :

- des premiers moyens de sélection commandables possédant une borne d'entrée connectée à une première borne de l'élément inductif et une ou plusieurs bornes de sortie respectivement connectées sur la ou les sorties reliées à ladite première borne de l'élément inductif, et,
- des deuxièmes moyens de sélection commandables possédant une borne d'entrée connectée à la deuxième borne de l'élément inductif et une ou plusieurs bornes de sortie respectivement connectées sur la ou les sorties reliées à ladite deuxième borne de l'élément inductif, et
- un condensateur par sortie et possédant une borne connectée à la borne correspondante des moyens de sélection correspondants.

L'alimentation à découpage peut comprendre également deux interrupteurs connectés respectivement entre une tension d'alimentation et une des bornes de l'élément inductif, et entre la masse et une des bornes de l'élément inductif.

Selon un mode de réalisation, la cellule de commutation est commandable cycliquement par une boucle d'asservissement. La boucle d'asservissement comporte des moyens de détermination aptes, au cours de chaque cycle de conduction, à déterminer une énergie totale correspondant à la somme des énergies élémentaires respectivement requises par toutes les sorties au cours de ce cycle, et des moyens de commande aptes au cours de ce cycle, à commander la cellule de commutation de façon à injecter, éventuellement en plusieurs fois, dans l'élément inductif ladite énergie totale, à sélectionner éventuellement à plusieurs reprises, les sorties requérant une énergie élémentaire non nulle et à restituer sur chaque sortie sélectionnée, l'énergie élémentaire correspondante.

Ce mode de réalisation permet d'obtenir une conduction de type continu, c'est-à-dire une continuité du courant dans l'élément inductif d'un cycle à un autre.

Les moyens de commandes peuvent également être aptes, au cours de chaque cycle de conduction, à sélectionner successivement et dans un ordre prédéterminé identique pour tous les cycles, les sorties requérant une énergie élémentaire non nulle.

Une des sorties reliées à la première borne de l'élément inductif et une des sorties reliées à la deuxième borne de l'élément inductif peuvent présenter des tensions de signes opposés et de valeurs absolues égales.

Selon un autre aspect, il est proposé un terminal d'un système de communication sans fil, incorporant une alimentation à découpage, telle que définie ci-avant.

Ce terminal peut former un téléphone mobile cellulaire.

Lorsque le terminal comporte une batterie et un amplificateur audio, l'alimentation à découpage est alimentée par la batterie du terminal et la tension de régulation de l'amplificateur audio peut être la différence de tension disponible entre deux sorties reliées respectivement aux deux bornes de l'élément inductif de l'alimentation à découpage.

Selon l'invention, il est proposé un procédé de commande comme décrit dans la revendication 10.

Plus particulièrement, la commande de la cellule de commutation comprend la sélection simultanée d'au moins deux sorties respectivement reliées aux deux bornes de l'élément inductif.

Selon un mode de mise en oeuvre, la cellule de commutation est commandable cycliquement et, au cours de chaque cycle de conduction, on injecte, éventuellement en plusieurs fois, dans l'élément inductif une énergie totale correspondant à la somme des énergies élémentaires respectivement requises par toutes les sorties au cours de ce cycle ; on sélectionne éventuellement à plusieurs reprises, les sorties requérant une énergie élémentaire non nulle et on restitue sur chaque sortie sélectionnée, l'énergie élémentaire correspondante.

En particulier, au cours de chaque cycle de conduction, on peut sélectionner successivement et dans un ordre prédéterminé identique pour tous les cycles, les sorties requérant une énergie élémentaire non nulle.

On peut sélectionner deux sorties reliées respectivement aux deux bornes de l'élément inductif selon une commande de façon à obtenir des tensions de signes opposés et de valeurs absolues égales.

Dans une application avantageuse, l'alimentation à découpage peut être incorporée dans un terminal d'un système de communication sans fil, par exemple un téléphone mobile cellulaire, comportant une batterie et un amplificateur audio.

L'alimentation à découpage est alors par exemple alimentée par la batterie du terminal et on régule alors par exemple la tension de l'amplificateur audio avec la différence de tension disponible entre deux sorties reliées respectivement aux deux bornes de l'élément inductif de l'alimentation à découpage.

Le document DONGSHENG MA ET AL: "Single-inductor multiple-output switching converters with bipolar outputs", ISCAS 2001, SYDNEY, AUSTRALIA, IEEE, US, vol. 1, 6 mai 2001, pages 301-304, divulgue un dispositif selon le préambule de la revendication 1.

D'autres avantages et caractéristiques de l'invention apparaîtront à l'examen de la description détaillée de modes de réalisation et de mise en oeuvre, nullement limitatifs, et des dessins annexés, sur lesquels :

- la figure 1 illustre très schématiquement un téléphone mobile cellulaire incorporant une alimentation à découpage ;
- la figure 2 illustre plus en détail mais toujours schématiquement, une cellule de commutation d'une alimentation à découpage ;
- la figure 3 illustre plus en détail mais toujours schématiquement, un mode de réalisation d'une alimentation à découpage comportant deux sorties ;
- la figure 4 illustre plus particulièrement un mode de mise en oeuvre du procédé de commande d'une alimentation à découpage.

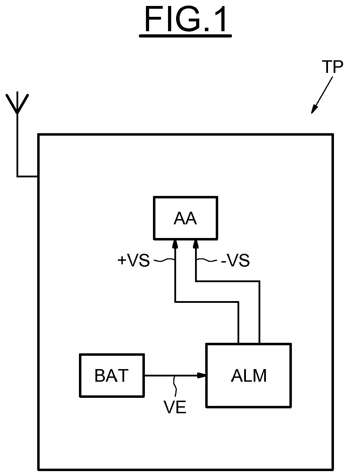

Sur la figure 1, la référence TP désigne globalement un terminal distant d'un système de communication sans fil, par exemple un téléphone mobile cellulaire. Ce téléphone mobile comporte un amplificateur audio AA.

L'amplificateur audio AA est alimenté par deux tensions régulées symétriques +VS et -VS, délivrées par deux sorties d'une alimentation à découpage ALM.

Par ailleurs, l'alimentation à découpage ALM est alimentée par une tension d'alimentation VE délivrée par une batterie. A titre d'exemple, cette tension VE peut varier, en fonction de l'état de la batterie, entre 2,5 Volts et 5,5 Volts.

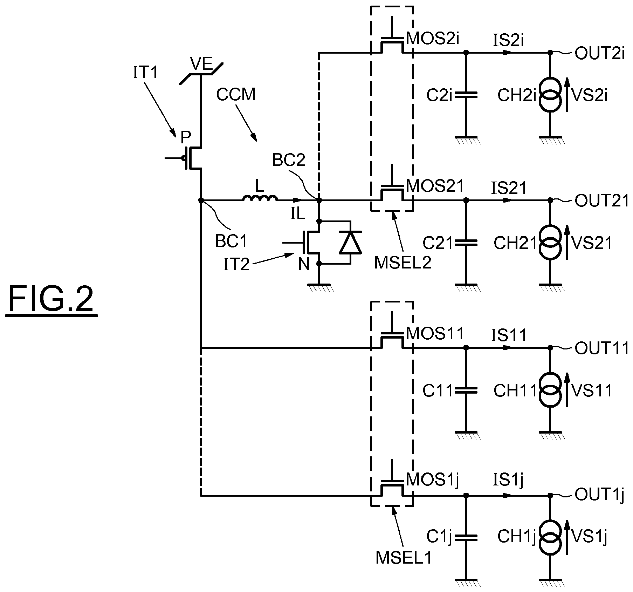

On va maintenant se référer plus particulièrement aux figures 2 à 4, pour un mode de réalisation particulier d'une alimentation à découpage ALM.

Dans le mode de réalisation décrit, l'alimentation à découpage est une alimentation du type abaisseur de tension, en ce sens que la tension régulée délivrée sur chacune des sorties de l'alimentation est égale au produit de la tension d'alimentation VE par un coefficient $\alpha$ inférieur à 1. Ce coefficient $\alpha$ est le rapport cyclique de l'alimentation à découpage.

Ceci étant, l'invention n'est pas limitée à l'utilisation d'une alimentation à découpage du type « abaisseur de tension », mais pourrait s'appliquer également à une alimentation du type « élévateur de tension ».

L'alimentation à découpage comporte une cellule de commutation CCM formée de deux interrupteurs IT1 et IT2, respectivement constitués dans cet exemple d'un transistor à effet de champ à canal P (transistor PMOS) alimenté par la tension d'alimentation VE, et par un transistor à effet de champ à grille isolée à canal N (transistor NMOS) relié à la masse. La cellule de commutation CCM comporte ici également un seul élément inductif L connecté entre une première borne BC1 commune avec l'interrupteur IT1, et une deuxième borne BC2 commune avec l'interrupteur IT2.

La cellule de commutation CCM comporte également plusieurs sorties OUT11-OUT1j et OUT21-OUT2i, qui forment également les sorties de l'alimentation à découpage.

Chaque sortie OUT1j, OUT2i est associée à un condensateur C1j, C2i connecté entre cette sortie et la masse.

Le condensateur C1j, C2i, associé à chaque sortie OUT1j, OUT2i, joue ainsi le rôle de réservoir d'énergie pour continuer à alimenter la sortie non sélectionnée et maintenir la tension sur ladite sortie, jusqu'à ce que celle-ci soit à nouveau sélectionnée.

Par ailleurs, on a représenté sur la figure 2, pour chaque sortie, une charge CH1j, CH2i alimentée par la tension régulée VS1j, VS2i délivrée par la sortie correspondante. Par ailleurs, un courant IS1j, IS2i circule dans cette charge CH1j, CH2i.

Ainsi, dans l'exemple de l'application du téléphone mobile cellulaire évoqué ci-avant, les charges CH11 et CH21 peuvent être par exemple l'amplificateur audio AA, et les tensions régulées VS11 et VS21 peuvent être respectivement les tensions -VS et +VS de l'alimentation de l'amplificateur audio AA.

Enfin, chaque sortie OUT1j est connectée à la borne BC1 par l'intermédiaire d'un interrupteur élémentaire, ici formé d'un transistor de sélection MOS1j, qui peut être un transistor à canal N ou à canal P. De même, chaque sortie OUT2i est connectée à la borne BC2 par l'intermédiaire d'un interrupteur élémentaire, ici formé d'un transistor de sélection MOS2i, qui peut également être un transistor à canal N ou à canal P. L'ensemble des interrupteurs élémentaires MOS11-MOS1j forme des premiers moyens de sélection MSEL1, et l'ensemble des interrupteurs élémentaires MOS21-MOS2i forme des deuxièmes moyens de sélection MSEL2. Les premiers et deuxièmes moyens de sélection MSEL1, MSEL2 vont permettre de sélectionner individuellement les sorties de l'alimentation à découpage.

On décrit à présent un mode de réalisation particulier dans lequel l'alimentation à découpage est commandée par une boucle d'asservissement de manière à stocker une énergie définie dans l'élément inductif puis à restituer cette énergie aux différentes sorties. Cependant, l'invention ne se limite pas à ce mode de réalisation particulier mais comprend également tout type d'alimentation à découpage. En particulier, l'alimentation à découpage peut être dépourvue par exemple d'une boucle d'asservissement et restituer systématiquement l'énergie à une sortie après ou pendant le stockage de cette énergie dans l'élément inductif.

L'interrupteur IT1 est successivement et alternativement fermé et ouvert, de façon à permettre un stockage d'énergie dans l'élément inductif, puis une restitution de cette énergie. La durée pendant laquelle l'interrupteur est ouvert et fermé au cours de chaque cycle de conduction, dépend du rapport cyclique $\alpha$.

L'énergie stockée dans l'élément inductif correspond à l'énergie totale requise par chacune des sorties OUT1j, OUT2i de l'alimentation. En particulier, l'alimentation à découpage ALM comporte également une boucle d'asservissement permettant de contrôler la cellule de commutation pour obtenir la tension de sortie désirée sur chacune des sorties.

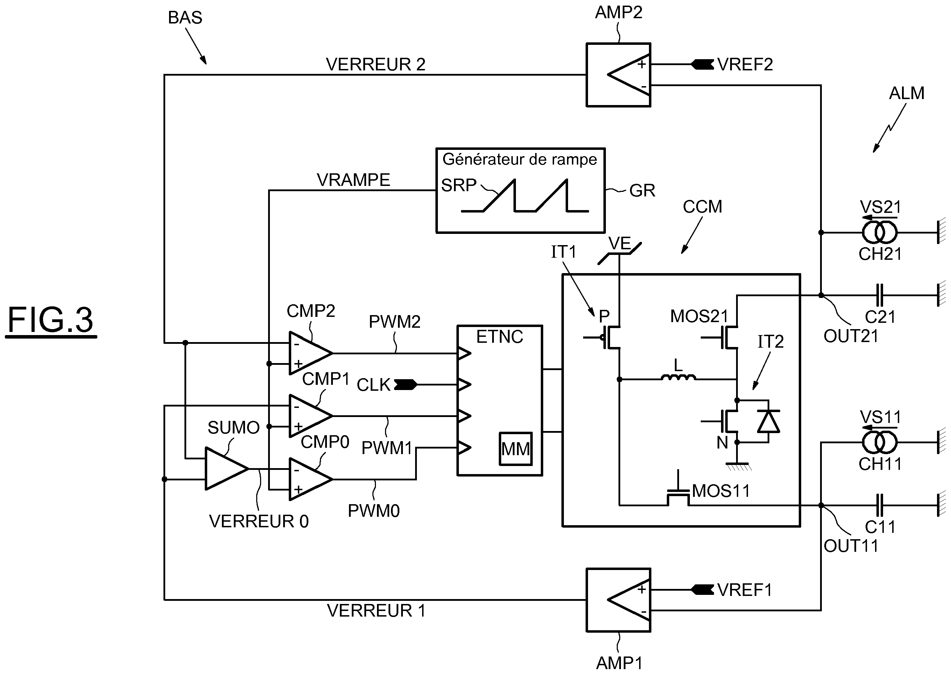

Dans l'exemple illustré sur la figure 3, on a représenté une cellule de commutation à deux sorties.

Chacune des tensions de sortie désirées VS21 et VS11 est une tension régulée dont la valeur est fixée par la valeur d'une tension externe de référence VREF1 et VREF2, respectivement. Ce sont ces tensions de référence VREF1 et VREF2 qui ont par exemple, dans l'application du téléphone mobile cellulaire évoquée, des signes opposés.

La boucle d'asservissement BAS comporte un premier moyen d'amplification élémentaire AMP1, dont l'entrée positive reçoit la tension VREF1, et dont l'entrée négative est connectée à la première borne de sortie OUT11. La différence entre la tension externe de référence VREF1 et la tension de sortie VS11, est par conséquent amplifiée dans l'amplificateur d'erreur AMP1, et la tension d'erreur correspondante VERREUR1 est une image de l'énergie élémentaire requise sur la sortie OUT 11.

La boucle d'asservissement BAS comporte de même un deuxième amplificateur d'erreur élémentaire AMP2 recevant, d'une part, la tension de référence VREF2 et, d'autre part, la tension VS21. Cet amplificateur AMP2 délivre une tension d'erreur VERREUR2, qui est également représentative de l'énergie élémentaire requise sur la sortie OUT21.

La boucle d'asservissement BAS comporte, par ailleurs, un moyen de sommation SUMO, dont les deux entrées sont respectivement reliées aux deux sorties des amplificateurs d'erreur élémentaires AMP1 et AMP2. La sortie du moyen d'amplification SUMO délivre par conséquent une tension VERREUR0 qui est représentative de l'énergie totale correspondant à la somme des énergies élémentaires respectivement requises par toutes les sorties au cours de chaque cycle de conduction.

La boucle d'asservissement BAS comporte également un pré-étage de commande formé ici de plusieurs comparateurs CMP0, CAMP1 et CMP2.

Plus précisément, le comparateur CMP0, dénommé ici comparateur principal, reçoit sur son entrée négative la tension d'erreur VERREUR0, et sur son entrée positive, une tension VRAMPE correspondant à un signal de rampe SRP généré de façon classique par un générateur de rampe GR de structure connue en soi.

La sortie du comparateur principal CMP0 délivre par conséquent un signal de commande impulsionnel principale PWM0.

Par ailleurs, le comparateur CMP1 est un comparateur dit « élémentaire », qui est associé à la sortie OUT11. Ce comparateur CMP1 reçoit sur son entrée négative la tension VERREUR1 et sur son entrée positive la tension VRAMPE. Il délivre un signal de commande impulsionnel élémentaire PWM1.

De même, le comparateur CMP2 est un comparateur dit « élémentaire », associé à la sortie OUT21, qui délivre, après avoir reçu sur ses deux entrées la tension d'erreur VERREUR2 et la tension VRAMPE, un signal de commande impulsionnel élémentaire PWM2.

Les signaux PWM0, PWM1 et PWM2 sont par conséquent des signaux impulsionnels dont les impulsions sont de largeur modulée par le niveau de la tension d'erreur.

Les moyens de commande de la boucle d'asservissement BAS comportent par ailleurs un étage numérique de commande ETNC, recevant les signaux PWM0, PWM1, PWM2, ainsi qu'un signal d'horloge CLK, qui est par ailleurs utilisé pour réinitialiser le générateur de rampe au début de chaque cycle de conduction (cette opération est effectuée sur le front montant de l'horloge CLK, par exemple).

L'étage de commande ETNC va élaborer à partir des signaux PWM0, PWM1 et PWM2, des signaux de commande destinés à commander, d'une part, les interrupteurs IT1 et IT2 de la cellule de commutation CCM, et, d'autre part, les moyens de sélection, c'est-à-dire les transistors MOS11 et MOS21.

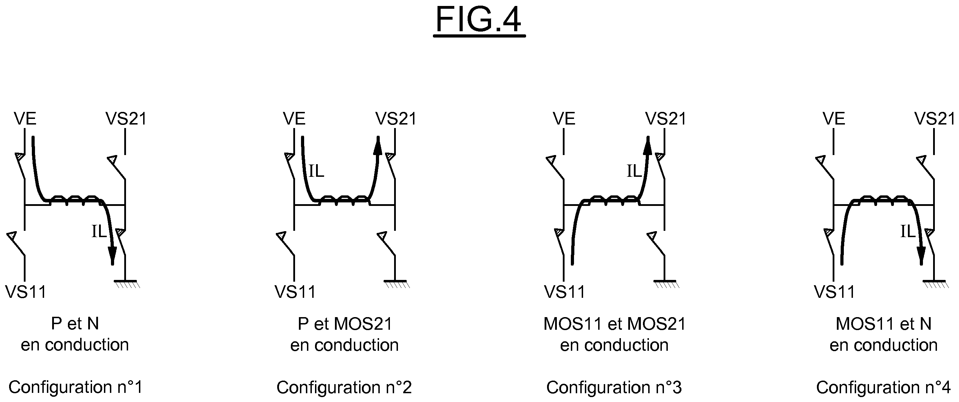

D'une façon générale, comme illustré sur la figure 4, il existe, pour l'alimentation à découpage à deux sorties, quatre configurations possibles différentes pour les interrupteurs IT1 et IT2, ainsi que pour les transistors MOS11 et MOS21 des moyens de sélection.

Sur ces figures, la référence IL désigne le courant circulant dans l'élément inductif L.

Dans la configuration n°1, les interrupteurs IT1 (transistor PMOS) et IT2 (transistor NMOS) sont en conduction. Ils permettent d'injecter de l'énergie dans l'élément inductif L.

Dans la configuration n°2, l'interrupteur IT1 et le transistor MOS21 sont en conduction. La sortie OUT21 est par conséquent sélectionnée.

Les sorties OUT11 et OUT21 peuvent également être sélectionnées simultanément avec la configuration n°3, dans laquelle ce sont les transistors MOS11 et MOS21 qui sont en conduction.

Enfin, la sortie OUT11 peut être sélectionnée avec la configuration n°4, dans laquelle l'interrupteur IT2 et le transistor MOS11 sont en conduction.

En considérant les rapports cycliques E1, E2, E3, E4 de respectivement la configuration 1, la configuration 2, la configuration 3, la configuration 4 qui sont égaux au rapport du temps, pendant un cycle, dans lequel la cellule de commutation est dans une configuration donnée sur le temps d'un cycle, il est possible d'en déduire les tensions moyennes VS11 et VS21. Ainsi, en considérant que les charges de sorties CH11 et CH21 sont identiques et égales à CH et que la résistance de l'élément inductif est RL, alors on obtient :

$$VS21 = \frac{(E2+E3).CH.(E1+E2).VE}{-2.CH.(E1+E2+E3).E1+CH.E1^2+RL+CH.(E1+E2)^2+CH-2.(E1+E2).CH+CH.(E1+E2+E3)^2}$$

et :

$$VS11 = \frac{(E1+E2-1).CH.(E1+E2).VE}{-2.CH.(E1+E2+E3).E1+CH.E1^2+RL+CH.(E1+E2)^2+CH-2.(E1+E2).CH+CH.(E1+E2+E3)^2}$$

Donc, en choisissant des rapports cycliques tels que $E1=E4$, on obtient bien : $VS21 = -VS11$.

D'une façon générale, selon le mode de réalisation particulier décrit précédemment, on va scruter et sélectionner successivement dans un ordre prédéterminé, qui est le même pour tous les cycles, les différentes sorties qui requièrent de l'énergie. Ceci permet d'assurer la continuité de courant dans l'élément inductif L entre la fin d'un cycle de conduction et le début du cycle de conduction suivant.

Cependant, il est également possible, au cours d'un même cycle de conduction, de sélectionner plusieurs fois chacune des configurations 1, 2, 3 ou 4 selon l'énergie à restituer sur chacune des sorties OUT11, OUT21. De même, il est aussi possible, au cours d'un même cycle, de ne pas sélectionner une ou plusieurs des configurations 1, 2, 3, 4.

Le mode de réalisation décrit permet ainsi de garder un courant dans l'élément inductif L relativement faible, même quand l'alimentation à découpage est utilisée en élévateur de tension.

Par ailleurs, le mode de réalisation peut ne comprendre que trois composants externes pour réaliser deux tensions symétriques : une inductance et deux capacités.

Les transistors MOS1j et MOS2i des moyens de sélection MSEL1, MSEL2 de la cellule de commutation CCM peuvent être des transistors à canal N ou à canal P. Leur choix dépendra de l'application et de la valeur des tensions de sortie régulée.

L'invention n'est pas limitée aux modes de réalisation qui viennent d'être décrits mais en embrasse toutes les variantes. Ainsi les interrupteurs élémentaires des moyens de sélection MSEL1, MSEL2 peuvent être formés de tout type de commutateur réalisable en circuit intégré, par exemple des transistors bipolaires ou des transistors IGBT. Il en est de même pour les interrupteurs IT1 et IT2.

**Revendications**

1. Alimentation à découpage (ALM) comprenant une cellule de commutation (CCM) comportant :

   - un seul élément inductif (L) à deux bornes (BC1, BC2) ;
   - plusieurs sorties (OUT1j, OUT2i) individuellement sélectionnables,
   - deux interrupteurs (IT1, IT2) connectés respectivement entre une tension d'alimentation (VE) et une des bornes de l'élément inductif (L), et entre la masse et une des bornes de l'élément inductif (L)

   **caractérisée par le fait que** les deux bornes de l'élément inductif (L) sont reliées respectivement à au moins deux des sorties individuellement sélectionnables, et en ce que l'alimentation comprend en outre des moyens de commande aptes à sélectionner simultanément lesdites au moins deux des sorties individuellement sélectionnables.

2. Alimentation à découpage (ALM) selon la revendication 1 dans laquelle la cellule de commutation (CCM) comprend :

   - des premiers moyens de sélection (MSEL1) commandables possédant une borne d'entrée connectée à une première borne (BC1) de l'élément inductif (L) et une ou plusieurs bornes de sortie respectivement connectées sur la ou les sorties (OUT11, OUT1j) reliées à ladite première borne (BC1) de l'élément inductif (L),
   - des deuxièmes moyens de sélection (MSEL2) commandables possédant une borne d'entrée connectée à la deuxième borne (BC2) de l'élément inductif (L) et une ou plusieurs bornes de sortie respectivement connectées sur la ou les sorties (OUT21, OUT2i) reliées à ladite deuxième borne (BC2) de l'élément inductif (L), et
   - un condensateur (C1j, C2i) par sortie (OUT1j, OUT2i) et possédant une borne connectée à la borne correspondante des moyens de sélection correspondants.

3. Alimentation à découpage (ALM) selon l'une des revendications 1 à 2 comprenant également deux interrupteurs (IT1, IT2) connectés respectivement entre une tension d'alimentation (VE) et une des bornes de l'élément inductif (L), et entre la masse et une des bornes de l'élément inductif (L).

4. Alimentation à découpage (ALM) selon l'une des revendications 1 à 3 dans laquelle la cellule de commutation (CCM) est commandable cycliquement par une boucle d'asservissement (BAS), et dans laquelle la boucle d'asservissement (BAS) comporte des moyens de détermination aptes, au cours de chaque cycle de conduction, à déterminer une énergie totale correspondant à la somme des énergies élémentaires respectivement requises par toutes les sorties au cours de ce cycle, et des moyens de commande aptes au cours de ce cycle, à commander la cellule de commutation de façon à injecter, éventuellement en plusieurs fois, dans l'élément inductif ladite énergie totale, à sélectionner éventuellement à plusieurs reprises, les sorties requérant une énergie élémentaire non nulle et à restituer sur chaque sortie sélectionnée, l'énergie élémentaire correspondante.

5. Alimentation à découpage selon la revendication 4 dans laquelle les moyens de commande sont aptes, au cours de chaque cycle de conduction, à sélectionner successivement et dans un ordre prédéterminé identique pour tous les cycles, les sorties requérant une énergie élémentaire non nulle.

6. Alimentation à découpage (ALM) selon l'une des revendications 1 à 5 dans laquelle une des sorties (OUT11, OUT1j) reliées à la première borne (BC1) de l'élément inductif (L) et une des sorties (OUT21, OUT2i) reliées à la deuxième borne (BC2) de l'élément inductif (L) présentent des tensions de signes opposés et de valeurs absolues égales.

7. Terminal d'un système de communication sans fil incorporant une alimentation à découpage (ALM) selon l'une des revendications 1 à 6.

8. Terminal selon la revendication 7 formant un téléphone mobile cellulaire.

9. Terminal selon la revendication 7 ou 8 comportant une batterie (BAT) et un amplificateur audio (AA), dans lequel l'alimentation à découpage (ALM) est alimentée par la batterie (BAT) du terminal, et la tension de régulation de l'amplificateur audio (AA) est la différence de tension disponible entre deux sorties reliées respectivement aux deux bornes de l'élément inductif de l'alimentation à découpage (ALM).

10. Procédé de commande d'une alimentation à découpage (ALM) comprenant une cellule de commutation (CCM) comportant un seul élément inductif (L) à deux bornes (BC1, BC2), plusieurs sorties (OUT1j, OUT2i) individuellement sélectionnables et deux interrupteurs (IT1, IT2) connectés respectivement entre une tension d'alimentation (VE) et une des bornes de l'élément inductif (L), et entre la masse et une des bornes de l'élément inductif (L), **caractérisé par le fait que**, les deux bornes de l'élément inductif (L) étant respectivement reliées à au moins deux des sorties individuellement sélectionnables, on sélectionne simultanément au moins deux sorties respectivement reliées aux deux bornes de l'élément inductif.

11. Procédé selon la revendication 10 dans lequel la cellule de commutation (CCM) est commandable cycliquement, et dans lequel, au cours de chaque cycle de conduction, on injecte, éventuellement en plusieurs fois, dans l'élément inductif (L) une énergie totale correspondant à la somme des énergies élémentaires respectivement requises par toutes les sorties au cours de ce cycle, on sélectionne, éventuellement à plusieurs reprises, les sorties requérant une énergie élémentaire non nulle et on restitue sur chaque sortie sélectionnée, l'énergie élémentaire correspondante.

12. Procédé selon la revendication 11 dans lequel, au cours de chaque cycle de conduction, on sélectionne successivement et dans un ordre prédéterminé identique pour tous les cycles, les sorties requérant une énergie élémentaire non nulle.

13. Procédé selon l'une des revendications 10 à 12 dans lequel on sélectionne deux sorties reliées respectivement aux deux bornes (BC1, BC2) de l'élément inductif (L) selon une commande de façon à obtenir des tensions de signes opposés et de valeurs absolues égales.

14. Procédé selon l'une des revendications 10 à 13 dans lequel l'alimentation à découpage (ALM) est incorporée dans un terminal d'un système de communication sans fil, par exemple un téléphone mobile cellulaire, comportant une batterie (BAT) et un amplificateur audio (AA), et dans lequel on alimente l'alimentation à découpage par la batterie du terminal, et on régule la tension de l'amplificateur audio avec la différence de tension disponible entre deux sorties reliées respectivement aux deux bornes de l'élément inductif de l'alimentation à découpage.

**Patentansprüche**

1. Schaltnetzteil (ALM) mit einer Schaltzelle (CCM), umfassend :

   - ein einziges induktives Element (L) mit zwei Anschlüssen (BC1, BC2) ;
   - mehrere individuell selektierbare Ausgänge (OUT1j, OUT2i),
   - zwei Schalter (IT1, IT2), jeweils geschaltet zwischen einer Versorgungsspannung (VE) und einem der Anschlüsse des induktiven Elements (L), und zwischen der Masse und einem der Anschlüsse des induktiven Elements (L)

   **dadurch gekennzeichnet, dass** die beiden Anschlüsse des induktiven Elements (L) mit jeweils wenigstens zweien der individuell selektierbaren Ausgänge verbunden sind, und dadurch, dass die Versorgung außerdem Steuereinrichtungen umfasst, die fähig sind, simultan die genannten wenigstens zwei der individuell selektierbaren Anschlüsse zu selektieren.

2. Schaltnetzteil (ALM) nach Anspruch 1, bei dem die Schaltzelle (CCM) umfasst :

   - erste steuerbare Selektionseinrichtungen (MSEL1) mit einem mit einem ersten Anschluss (BC1) des induktiven Elements (L) verbundenen Eingangsanschluss und einem oder mehreren Ausgangsanschlüssen, jeweils angeschlossen an den Ausgang oder die Ausgänge (OUT11, OUT1j), verbunden mit dem ersten Anschluss (BC1) des induktiven Elements (L),

- zweite steuerbare Selektionseinrichtungen (MSEL2) mit einem mit dem zweiten Anschluss (BC2) des induktiven Elements (L) verbundenen Eingangsanschluss und einem oder mehreren Ausgangsanschlüssen, jeweils angeschlossen an den Ausgang oder die Ausgänge (OUT21, OUT2i), verbunden mit dem zweiten Anschluss (BC2) des induktiven Elements (L), und

- einen Kondensator (C1j, C2i) pro Ausgang (OUT1j, OUT2i), der einen Anschluss besitzt, der verbunden ist mit dem entsprechenden Anschluss der entsprechenden Selektionseinrichtungen.

3. Schaltnetzteil (ALM) nach einem der Ansprüche 1 bis 2, ebenfalls zwei Schalter (IT1, IT2) umfassend, jeweils geschaltet zwischen einer Versorgungsspannung (VE) und einem der Anschlüsse des induktiven Elements (L), und zwischen der Masse und einem der Anschlüsse des induktiven Elements (L).

4. Schaltnetzteil (ALM) nach einem der Ansprüche 1 bis 3, bei dem die Schaltzelle (CCM) zyklisch steuerbar ist durch einen Regelkreis (BAS), und bei dem der Regelkreis (BAS) Determinationsmittel umfasst, fähig bei jedem Leitzyklus eine der Summe der jeweils im Laufe dieses Zyklus von allen Ausgängen angeforderten Elementarenergien entsprechende Gesamtenergie zu bestimmen, und Steuereinrichtungen umfasst, fähig, im Laufe dieses Zyklus die Schaltzelle derart zu steuern, dass sie, eventuell in mehreren Malen, in das induktive Element die genannte Gesamtenergie einspeist, die eine Nichtnull-Elementarenergie anfordernden Ausgänge eventuell in mehreren Wiederholungen selektiert und an jeden selektierten Ausgang die entsprechende Elementarenergie abgibt.

5. Schaltnetzteil nach Anspruch 4, bei dem die Steuereinrichtungen fähig sind, im Laufe jedes Leitzyklus sukzessiv und in einer für alle Zyklen identischen festgelegten Reihenfolge die Ausgänge zu selektieren, die eine Nichtnull-Elementarenergie anfordern.

6. Schaltnetzteil (ALM) nach einem der Ansprüche 1 bis 5, bei dem einer der mit dem ersten Anschluss (BC1) des induktiven Elements (L) verbundenen Ausgänge (OUT11, OUT1j) und einer der mit dem zweiten Anschluss (BC2) des induktiven Elements (L) verbundenen Ausgänge (OUT21, OUT2i) Spannungen mit umgekehrten Vorzeichen und absolut gleichen Werten aufweisen.

7. Endgerät eines drahtlosen Kommunikationssystems mit einem Schaltnetzteil (ALM) nach einem der Ansprüche 1 bis 6.

8. Endgerät nach Anspruch 7, das ein Mobilfunktelefon bildet.

9. Endgerät nach Anspruch 7 oder 8 mit einer Batterie (BAT) und einem Audioverstärker (AA), bei dem das Schaltnetzteil durch eine Batterie (BAT) des Endgeräts gespeist wird und die Regelspannung des Audioverstärkers (AA) die zwischen zwei Ausgängen vorhandene Spannungsdifferenz ist, die jeweils mit den beiden Anschlüssen des induktiven Elements des Schaltnetzteils (ALM) verbunden sind.

10. Steuerverfahren eines Schaltnetzteils (ALM) mit einer Schaltzelle (CCM), umfassend ein einziges induktives Element (L) mit zwei Anschlüssen (BC1, BC2), mehreren individuell selektierbaren Ausgängen (OUT1j, OUT2i) und zwei Schalter (IT1, IT2), die jeweils zwischen einer Versorgungsspannung (VE) und einem der Anschlüsse des induktiven Elements (L) beziehungsweise zwischen der Masse und einem der Anschlüsse des induktiven Elements geschaltet sind, **dadurch gekennzeichnet, dass** die beiden Anschlüsse des induktiven Elements (L) mit jeweils wenigstens zweien der individuell selektierbaren Ausgänge verbunden sind, man simultan wenigstens zwei Ausgänge selektiert, die jeweils mit den beiden Anschlüssen des induktiven Elements verbunden sind.

11. Verfahren nach Anspruch 10, bei dem die Schaltzelle (CCM) zyklisch steuerbar ist, und bei dem man im Laufe jedes Leitzyklus, eventuell in mehreren Malen, in das induktive Element (L) eine Gesamtenergie einspeist, die der Summe der jeweils von allen Ausgängen im Laufe dieses Zyklus angeforderten Elementarenergien entspricht, man, eventuell in mehreren Wiederholungen, die Ausgänge selektiert, die eine Nichtnull-Elementarenergie anfordern, und man an jeden selektierten Ausgang die entsprechende Elementarenergie abgibt.

12. Verfahren nach Anspruch 11, bei dem man im Laufe jedes Leitzyklus sukzessiv und in einer für alle Zyklen identischen festgelegten Reihenfolge die Ausgänge selektiert, die eine Nichtnull-Elementarenergie anfordern.

13. Verfahren nach einem der Ansprüche 10 bis 12, bei dem man zwei jeweils mit den Anschlüssen (BC1, BC2) des induktiven Elements (L) verbundene Ausgänge gemäß eines Befehls derart selektiert, dass man Spannungen mit umgekehrten Vorzeichen und absolut gleichen Werten erhält.

14. Verfahren nach einem der Ansprüche 10 bis 13, bei dem das Schaltnetzteil (ALM) in ein Endgerät, zum Beispiel ein Mobilfunktelefon, eines drahtlosen Kommunikationssystems integriert ist, umfassend eine Batterie (BAT) und einen Audioverstärker (AA), und bei dem man das Schaltnetzteil durch eine Batterie des Endgeräts speist, und man die Spannung des Audioverstärkers mit der Spannungsdifferenz regelt, die zwischen jeweils zwei Anschlüssen des induktiven Elements des Schaltnetzteil vorhanden ist.

**Claims**

1. Switching power supply (ALM) comprising a switching cell (CCM) comprising:

   - a single inductive element (L) with two terminals (BC1, BC2);
   - a plurality of individually selectable outputs (OUT1j, OUT2i),
   - two switches (IT1, IT2) respectively connected between a supply voltage (VE) and one of the terminals of the inductive element (L), and between the ground and one of the terminals of the inductive element (L),

   **characterized in that** the two terminals of the inductive element (L) are respectively connected to at least two of the individually selectable outputs, and **in that** the power supply further comprises control means adapted for simultaneously selecting said at least two of the individually selectable outputs.

2. Switching power supply (ALM) according to claim 1, wherein the switching cell (CCM) comprises:

   - first controllable selection means (MSEL1) having an input terminal connected to a first terminal (BC1) of the inductive element (L) and one or more output terminals respectively connected to the output or outputs (OUT11, OUT1j) connected to said first terminal (BC1) of the inductive element (L),
   - second controllable selection means (MSEL2) having an input terminal connected to the second terminal (BC2) of the inductive element (L) and one or more output terminals respectively connected to the output or outputs (OUT21, OUT2i) connected to said second terminal (BC2) of the inductive element (L), and

   one capacitor (C1j, C2i) per output (OUT1j, OUT2i) and having a terminal connected to the corresponding terminal of the corresponding selection means.

3. Switching power supply (ALM) according to one of claims 1 to 2, further comprising two switches (IT1, IT2) respectively connected between a supply voltage (VE) and one of the terminals of the inductive element (L), and between the ground and one of the terminals of the inductive element (L).

4. Switching power supply (ALM) according to one of claims 1 to 3, wherein the switching cell (CCM) is cyclically controllable by a feedback loop (BAS), and wherein the feedback loop (BAS) comprises means of determination adapted for determining, during each conduction cycle, a total energy corresponding to the sum of the elementary energies respectively required by all the outputs during this cycle, and control means adapted for controlling, during this cycle, the switching cell so as to inject, optionally in several times, said total energy into the inductive element, to selection, optionally several times, the outputs requiring a non-zero elementary energy, and to restore the corresponding elemental energy on each selected output.

5. Switching power supply according to claim 4, wherein the control means are adapted for selecting, during each conduction cycle, successively and in an identical predetermined order for all the cycles, the outputs requiring a non-zero elemental energy.

6. Switching power supply (ALM) according to one of claims 1 to 5, wherein one of the outputs (OUT11, OUT1j) connected to the first terminal (BC1) of the inductive element (L) and one of the outputs (OUT21, OUT2i) connected to the second terminal (BC2) of the inductive element (L) have voltages of opposite signs and equal absolute values.

7. Terminal of a wireless communication system, incorporating a switching power supply (ALM) according to one of claims 1 to 6.

8. Terminal according to claim 7, forming a cellular mobile telephone.

9. Terminal according to claim 7 or 8, comprising a battery (BAT) and an audio amplifier (AA), wherein the switching power supply (ALM) is supplied by the battery (BAT) of the terminal, and the control voltage of the audio amplifier (AA) is the voltage difference available between two outputs connected respectively to the two terminals of the inductive element of the switching power supply (ALM).

10. Method for controlling a switching power supply (ALM) comprising a switching cell (CCM) comprising a single inductive element (L) with two terminals (BC1, BC2), a plurality of individually selectable outputs (OUT1j, OUT2i), and two switches (IT1, IT2) respectively connected between a supply voltage (VE) and one of the terminals of the inductive element (L), and between the ground and one of the terminals of the inductive element (L), **characterized in** the two terminals of the inductive element (L) being respectively connected to at least two of the individually selectable outputs, simultaneously selecting at least two outputs respectively connected to the two terminals of the inductive element.

11. Method according to claim 10, wherein the switching cell (CCM) is cyclically controllable, and wherein, during each conduction cycle, a total energy corresponding to the sum of the elementary energies respectively required by all the outputs during this cycle is injected, optionally in several times, in the inductive element (L), at least two outputs requiring a non-zero elementary energy are selected, optionally several times, and the corresponding elementary energy is restored on each selected output.

12. Method according to claim 11, wherein, during each conduction cycle, the outputs requiring a non-zero elemental energy are selected successively and in an identical predetermined order for all the cycles.

13. Method according to one of claims 10 to 12, wherein two outputs respectively connected to the two terminals (BC1, BC2) of the inductive element (L) are selected according to a command so as to obtain voltages of opposite signs and equal absolute values.

14. Method according to one of claims 10 to 13, wherein the switching power supply (ALM) is incorporated in a terminal of a wireless communication system, for example a cellular mobile telephone, comprising a battery (BAT) and an audio amplifier (AA), and wherein the switching power supply is supplied by the battery of the terminal, and the voltage of the audio amplifier is adjusted with the difference in voltage available between two outputs respectively connected to the two terminals of the inductive element of the switching power supply.

# FIG.1

TP

AA

+VS    -VS

BAT    ALM

VE

FIG.2

FIG.3

EP 1 986 314 B1

13

# FIG.4

P et N
en conduction

Configuration n°1

P et MOS21
en conduction

Configuration n°2

MOS11 et MOS21
en conduction

Configuration n°3

MOS11 et N
en conduction

Configuration n°4

EP 1 986 314 B1

## RÉFÉRENCES CITÉES DANS LA DESCRIPTION

**Littérature non-brevet citée dans la description**

- Single-inductor multiple-output switching converters with bipolar outputs. **DONGSHENG MA et al.** ISCAS 2001. IEEE, 06 Mai 2001, vol. 1, 301-304